# EUROPEAN PATENT SPECIFICATION

(11) **EP 3 058 472 B1**
(45) Date of publication and mention of the grant of the patent: **14.10.2020**
(21) Application number: 14853974.5
(22) Date of filing: 29.01.2014
(51) Int. Cl.: G06Q 99/00, G06N 7/00, H04L 29/06, H04L 29/08, G06F 21/31, H04W 4/20, H04W 12/12

(54) **SYSTEM AND METHOD FOR REPORTING ON AUTOMATED BROWSER AGENTS**
SYSTEM UND VERFAHREN ZUR BERICHTERSTATTUNG ÜBER AUTOMATISIERTE BROWSER-AGENTEN
SYSTÈME ET PROCÉDÉ DE GÉNÉRATION DE RAPPORTS SUR DES AGENTS DE NAVIGATION AUTOMATISÉS

(30) Priority: 18.10.2013 US 201314057730; 02.12.2013 US 201314093964
(43) Date of publication of application: 24.08.2016
(73) Proprietor: White Ops, Inc., New York, NY 10010 (US)
(72) Inventor: Kaminsky, Daniel, New York, NY 10010 (US); Tiffany, Michael J.J., New York, NY 10010 (US)
(74) Representative: Zahn, Matthias
(86) International application number: PCT/US2014/013553
(87) International publication number: WO 2015/057256

(56) References cited:
- WO-A1-2012/073233
- WO-A2-2010/143152
- US-A1- 2011 131 652
- US-A1- 2011 185 421
- US-A1- 2012 246 293
- US-A1- 2013 198 203
- US-A1- 2013 239 195
- US-B2- 8 433 785
- Anonymous: "Support vector machine - Wikipedia, the free encyclopedia", , 3 September 2012 (2012-09-03), XP055089541, Retrieved from the Internet: URL:http://en.wikipedia.org/w/index.php?ti tle=Support_vector_machine&oldid=510528719 [retrieved on 2013-11-21]

## Description

### CROSS-REFERENCE TO RELATED APPLICATIONS

This patent application claims priority to, U.S. Provisional Patent Application No. 61/732,368, filed December 2, 2012. It is also a Continuation-in-Part of U.S. patent application 14/057,730 filed on October 18,2013.

### FIELD OF THE INVENTION

This invention relates to the general field of Internet communications software, and it has certain specific applications to the analytical evaluation of Internet communications.

### BACKGROUND OF THE INVENTION

For a host of reasons, numerous individuals and organizations are actively engaged on a daily basis in sending malicious, automated traffic to web pages and other internet destinations, and making that traffic appear as if it that traffic is human and not automated. For example, the vast majority of revenue presently derived from Internet traffic results from paid advertising. Companies and individuals pay for the placement of advertisements on the Internet where they may be seen and interacted with by people who may be interested in learning about and purchasing their products. Given that these advertising interactions take place electronically and at a distance, it is possible for those interested in capturing some portion of the revenue spent on Internet advertising to employ automated software agents to defraud those paying for the advertising. This is done by making it appear as if advertisements have been viewed by humans who may be interested in a given product, where, in reality, a given advertisement has only been viewed or interacted with by malicious software, which exists only for the purpose of committing such acts of fraud.

Currently, there exist passive systems and methods which detect automation, or bot, differentials such as, for example, whether all content is loaded, or whether request rates match legitimate browsers. Detection of these differentials is helpful from a networking hardware perspective - one can implement the system on a network, interfere with nothing, and recover data. This data, however, is not necessarily high quality because, for example, legitimate human users might have unusual access patterns, caching layers prevents requests like automated bots might, and most importantly, bots are increasingly becoming full browsers thus matching many of these passive metrics quite frequently.

Documents US2012/246293A1, WO2012/073233A1, WO2010/143152A2 represent relevant prior art.

### SUMMARY OF THE INVENTION

During the initial learning period, all browsing activity on a page (e.g. mouse clicks) can be split into groups based on their origin. For example, page requests coming from computers on protected government network are most likely submitted by humans, and will be categorized as such. Requests coming from IP addresses belonging to known bot networks have a low probability of being human interaction and will be categorized in a separate group.

Data collection by the analysis server is made possible by code snippets inserted (or injected) into the page code by the web server before the page is sent to the user's browser. This code performs data collection about the user's interaction with the web page and transmits the collected data to the analysis server via multiple communication channels.

At the bot detection stage, data transmitted to the analysis server is checked if it matches a pattern characteristic for human interaction or automated bot submission pattern. The typical elements of a bot pattern include, but are not limited to, (1) interaction with invisible elements of the page, (2) missing properties of an interaction (for example, a mouse click), (3) wrong interaction timing (for example, a mismatch between mouse down and mouse up timestamp), (4) interface behavior being atypical for human (for example, mouse moving along an absolutely straight line), (5) wrong page element property due to the fact that a bot failed to guess correctly what data will be entered by a browser during the page load, (6) a set of available communication channels does not match the set characteristic for the typical human-operated computer. The results of the detection are provided to the customer of the analysis system in real time or, alternatively, as a report for a given time period.

### BRIEF DESCRIPTION OF THE DRAWINGS

Figure 1 illustrates an example of the deployment of the present invention in a typical webpage scenario.
Figure 2 illustrates an example of the process employed by the present invention to analyze internet traffic and determine whether a given user is a human or an automated agent.
Figure 3 illustrates the general data collection process of the present invention.

### DETAILED DESCRIPTION OF THE PREFERRED EMBODIMENT

### Definitions

HTML (HyperText Markup Language). The primary programming language used for creating, transmitting and displaying web pages and other information that can be displayed in an Internet browser.

HTTP (Hypertext Transfer Protocol). The standard World Wide Web client-server protocol used for the exchange of information (such as HTML documents, and client requests for such documents) between a Web browser and a Web server. HTTP includes several different types of messages which can be sent from the client to the server to request different types of server actions. For example, a "GET" message, which has the format GET <URL>, causes the server to return the content object located at the specified URL.

Means for detecting. This term includes, but is not limited to, actively inserting a code snippet into a page HTML code before the page is sent to a browser or passive monitoring of otherwise normal behavior. Active insertions of code can be static, meaning that they contain fully the amount of material required to perform a complete analysis according to the present invention. Or active insertions can be dynamic, meaning that they communicate with the detection network to retrieve additional code or description keys, resulting in compilation of additional statistical data. While the below examples speak of active insertion, they should be read to include the possibility of passive monitoring as an alternate means for detection.

Code Snippet. Although the term "snippet" may imply a small portion, this term should not be read as limiting - the amount of code inserted can range in size. The code snippet is modularized, with chunks for elements including, but not limited to, browser DOM analysis, flash timing analysis, mouse event capture, etc. The ability to dynamically mutate a given code snippet allows for correlation of bot types and/or classes with customer financial flows, e.g., by integrating parameters ("analysis dimensions") from a given customer into a given snippet.The present invention discloses an active probing model for the collection of qualitative metrics evaluating human-driven browsing activity against automated agent-driven (i.e. hot-driven) activity over a computer network. Through this active probing model, a much deeper reservoir of differentials between the two types of activity can be implemented (compared to the differentials used in the current state of the art). In contrast to passive methods of collecting content which already exists on a network and content sent to existing systems (i.e. current methods for bot detection), the method disclosed herein actively loads additional code and sends additional content on the wire to different and new locations ("active probing"). JavaScript (JS) and Flash, for example, can be actively probed by the claimed system and method in order to detect bot activity and assemble a report based on qualitative performance metrics.

The claimed system and method assumes that legitimate human users, by in large, have JavaScript and other active scripting technologies, including but not limited to Flash, enabled and are using full web browsers. As such, a non-browser bot will simply fail to execute any queries that are at all dependent on JavaScript. The trap set for potential attackers is that, in evading this exceedingly reliable detection mechanism, they must now actually emulate all parts of the browser. And because a real JavaScript environment-as well as other scripting technologies-has an infinite amount of properties that may be probed, the attacker must emulate every property potentially probed. Thus, previously unnoticed information and resulting discrepancies become exposed. For example, when a mouse event is falsified, one timestamp associated with that event may become absent; an auxiliary field may be set to a unique and incorrect value; or a mouse event rate is too stable or too unstable. Some examples of properties that can be probed include but are not limited to: (1) the precise relationship of mouse events seen on a page (e.g., a click associated with a mouse-up or mouse-down movement, agreement between the two timestamps associated with each mouse event, as discussed above, etc.); (2) the rate that Flash is updated (e.g., per second) and the reliability of its calls; (3) operation of Flash stages in all locations of operation (e.g., operating in sync); and (4) the speed of completing a graphical update (e.g. to a <CANVAS> element), which might indicate the type of hardware used or the active updating of a real user screen.

The present invention allows the differentiation of malicious automated agents from humans by gathering and processing elements of a given user's interaction with a web page that occurs after a web page has been loaded by the user, and comparing those elements to reference results drawn from a control group. This is achieved in part by placing certain elements within the code of a web page prior to it being loaded by a given user, so that those elements may be evaluated after that user has loaded that web page.

The elements monitored and evaluated fall into two main classes of data: (1) content that exists (or is absent, i.e. does not exist) at page load, and (2) content that is generated over time (or timing) as the page persists in potentially usable form. Content that exists at page load encompasses bits, or parts of code, which are accessible or visible even though they should not be. This content consists of JavaScript ("DOM") elements which exist (or do not exist) due to the manner in which the browser is hosted. For example, if loaded by a human user, some bits would be inaccessible for security or other reasons; however, if loaded by an automated agent or hot, the same bits would be accessible). For another example, automated agents also constantly and actively inject bot-specific configurations in manners that are different from the behavior of the browser or the site being monitored. In general, aspects of a shell (e.g. Internet Explorer, Firefox, Safari, Chrome) are exposed to the JavaScript environment in an engine (e.g. Trident, Gecko, Webkit), and bots, being shells themselves, either expose too much information or too little information, and the discrepancies are captured by the active probing model of the present invention. These captured characteristics include, but are not limited to, HTML5 standards compliance, patterns in error handling (including information about what language the errors are translated into), and browser elements injected by the browser shell rather than the native object (different objects are injected or not injected based on the host, which could be, e.g., Internet Explorer or an automated agent (i.e. bot) framework).

The second class of data, content that is generated over time (or timing), generally refers to elements that vary due to interaction with a human user. These might be events that take incorrect amounts of time, relative to one another, because there is no actual human for whom the events are being performed. Timing attacks work against more than just cryptographic systems. It is often faster, but sometimes much slower, to express the result of a browser operation (of which there are hundreds of thousands) when there is no screen to update and no user to inform. For example, error messages can be suppressed, or the graphics hardware might notice that no pixels require update. By measuring absolute and relative timing differentials, bots expose themselves to the claimed system and method. Tests are generated on the infinite number of such differentials, hosted quite infrequently (since the purpose of bots is to operate at scale, this does not have to occur often), and thus an attacking developer faces the obstacle of forging credentials he does not necessarily know in advance.

The present invention collects data regarding any given user's interaction with a webpage after it has been loaded. This data includes, but is not limited to, mouse activity (where the mouse is located, number of updates per second, geometry of mouse movement, ancillary data to mouse event data-i.e. the metadata associated with a mouse click, scroll up, scroll down, or scroll over, the correlation between mouse events, etc.), missing data when an event is incorrectly synthesized, keyboard activity, accelerometer data, scroll events, average read and visit time, page update rate (animation rate has a strong correlation with visibility of a page), and supported network protocols and web standards (bots can break communication pathways).

Both classes of performance metrics force a given system to follow code paths which differ depending on whether the browser interaction is automated or human. Timing measurement data is detectable and differentiable because operations still complete, they just take longer or shorter, depending on the type of user. There is also potential for overlap between the families (i.e. classes of data). For example, a different security check may fail (or not fail) under automation, yielding the same reaction to a client code, but 10% slower. Additionally, repeating the test many times allows for even very small timing differentials to be amplified to the point of reliable distinguishing ability.

The process with regard to a single given metric can be generally plotted out by the following steps: (1) obtain differential; (2) measure in client system (or first server, analysis server), under amplified circumstances if necessary; (3) send to reporting server (or second server), obfuscated if possible; and (4) attach finding to session identifier, thus creating a user interaction data unit, where a compilation of user data units makes up a report.

The following is an example of execution using the presently claimed method: Small chunks of JavaScript are executed. If the resulting data is large, some client side analysis and compression is completed (e.g., on a metric for 'how many times is Flash being called a second', updates are sent only when the calling rate changes by more than 10%, and the updates sent can contain some statistics pre-calculated by a given client). Sending feedback becomes orthogonal to collection. Regardless of the subsystem from which data is extracted, one of the ultimate goals is minimization and aggregation of postbacks.

The user interaction data elements are compared with reference results drawn from a set of three different control groups: (1) those interactions believed to be made by automated agents or bots, (2) those interactions believed to be made by a human, and (3) those interactions which are unclear as to whether performed by a human or a bot. The best control groups for sets of elements of true human interaction arise from web browsers driven from authenticated locations in places with no reason for advertising fraud. The best control groups for sets of elements of bot behavior arise from "bot zoos" or other automated agent networks.

Before the process of differentiation begins, an individualized code snippet must be inserted into the HTML code of a given web page. When this code snippet is present in the code of a given web page and that page is accessed, performance metrics are sent to remote analysis servers via asynchronous HTTP posts. These metrics evaluate the behavior and performance of the entity that viewed or is viewing the given web page. and how that page was loaded. The code snippet is injected as JavaScript alongside an advertisement or other script load event. As the Internet is comprised of many such loads (or injections), this invention creates merely one more. For example, a performance metric based on a mouse event can be collected in the following manner: (1) Handlers and listeners are registered for a mouse event; (2) The handler receives the various timestamps and values associated with the mouse event; (3) The system then emits the raw timestamps and values, or a summary thereof, over the network. If no listener is registered, it would be impossible to recover this data from the ambient traffic.

Performance metrics for various visitors to a given web page containing the code snippet, as well as those for all web pages containing similar code snippets, are compiled and aggregated by the remote analysis servers into reportable metrics, which in turn are made available to the operator of a given web page in a number of reporting mediums, including, but not limited to, password protected interactive HTML dashboards, exportable spreadsheet documents, and subscription based email and PDF reports, and may be used in real time to control access to a given web page.

The performance metrics that are reportable include, but are not limited to, the origin and destination of a visitor, the likelihood that the visitor was an automated agent or human, and a variety of variables that identify information, such as advertising data points, including, but not limited to, advertising campaign specific code, the advertising medium, the source ID, and the advertising provider.

These metrics are evaluated in such a way by the remote analysis servers that the information presented to the operator of a given web page that has included a code snippet is presented with a qualitative evaluation of whether or not a given visit to that web page was or was not made by an automated agent. This process of evaluation entails the following: the code snippet sends "emit events" from various "plugins". These emissions (i.e. "emit events") are sent via a variety of network channels, not all of which are always available. The present channels used are <img> tags, XMLHTTPRequests with CORS (Cross Origin Resource Sharing), and [Frame Form Post events. Initially, IFrame Form Posts are used, since they are the most compatible. Seconfly, if CORS is compatible, the system can be upgraded to CORS. Other channels include WebSockets and Same Domain XMLHTTPRequest (which requires use of a local iframe that is configured to speak cross domain, through a toolkit like EasyXDM).

Furthermore, the computational process required to determine the above performance metrics and ultimately evaluate whether a visitor is automated or human can be implemented either via batch processing or via stream processing. Batch processing can be more efficient and can collate metrics across several events. Stream processing can scale better than batch processing but it cannot, for example, use future data to inform past impressions of normality (because, at the time of decision, the future event has not yet occurred). With stream processing, near-real time evaluation of a given user can be achieved. Thus, although normality metrics are determined by the past only, stream processing allows for the use of transaction identifiers embedded in a particular measurement event to evaluate, within thirty seconds of the last time of a given user's interaction, whether or not that user was a bot or a human.

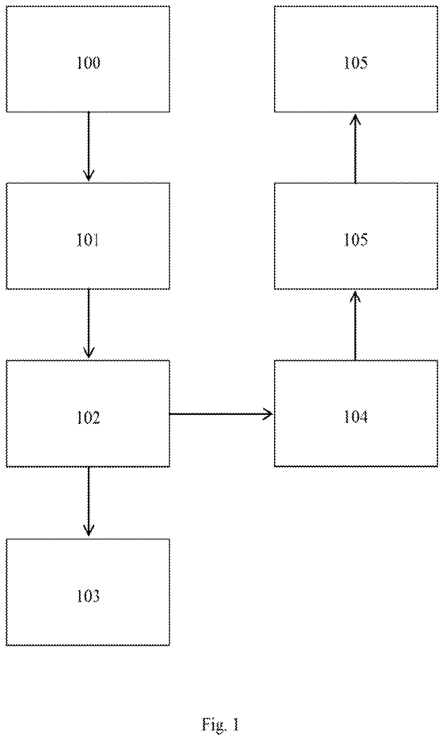

Figure 1 gives one example of how the present invention may be deployed in a typical webpage scenario. First, a code snippet containing a unique identified is inserted into the webpage **100.** A user (human or automated) then requests the web page containing the code snippet **101.** The web page containing the code snippet is loaded by the user **102.** And as the user continues browsing normally **103**, data regarding the user's interaction with the web page is sent to the analysis server **104**, where the analysis server further analyzes the user data qualitatively **105**.

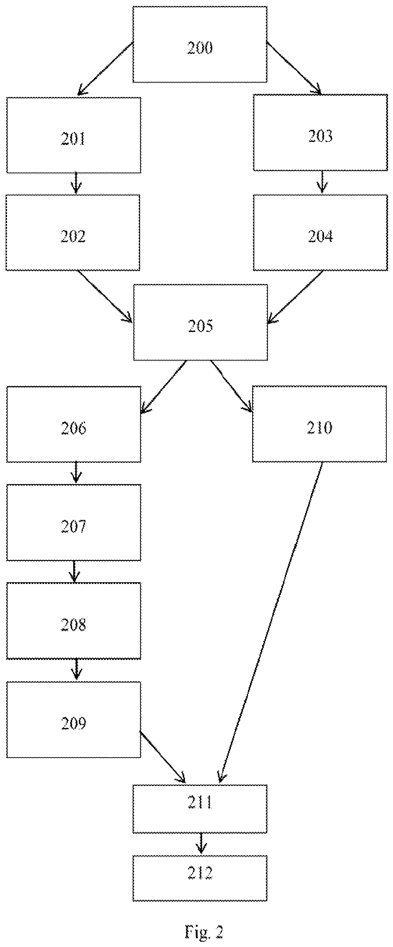

Figure 2 shows an example application of the repeatable process employed by the present invention to analyze internet traffic. The illustrated process is comprised of the following steps: Declare or collect customer (i.e. client) identifier, peer (i.e. who the customer would like to test against, e.g., publisher, advertisement location, secondary exchange, etc.) identifier, and transaction (i.e. the particular advertisement view) identifier **200;** Load Loader GS **201** from analysis server; Script load of Signal Flare GIF **202** from analysis server; load Signal Flare GIF **203** from analysis server; load human monitor (pagespeed.js) **204** from analysis server; Report load succeeded, under state "init" with all available metrics to analysis server **205**; If a human act is detected **206**, immediately issue a second report (state "first") **207**, wait six (6) seconds **208**, and issue a final report (state "statecheck") **209**; If no human act is detected **210**, steps **207**, **208**, and **209** do not occur; Perform a qualitative analysis of available metrics and reports, if any **211**; and Report a qualitative score for the Customer ID (session) **212.**

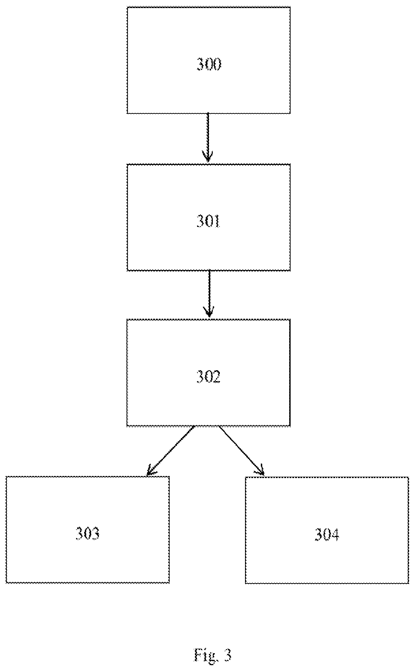

The process described above and illustrated by Figure 2 is one example of the more general process employed and claimed by the present invention. Specifically, this broader process, shown in Figure 3, occurs as follows: First, customer, peer, and transaction identifiers are collected **300**; Next, these identifiers are embedded in an active probe, where the active probe (1) retrieves extra state from the client execution environment and (2) streams data back over multiple channels **301**; Third, these actively probed characteristics are measured against known botprints (i.e. bot characteristics) **302**. The two main classes of characteristics probed and analyzed are (1) what channels or information is available and/or absent (note: the presence, or absence, of a channel is, by itself, a botprint source), and (2) the time it takes for properties/characteristics to be probed. The performed analysis measures the degree/amount of automation as well as the degree-amount of true human interaction. Finally, reports are issued (1) to the customer/client, reporting on the automation/hot percentage **303**, according to the dimensions given in the peer identifier, and (2) to the server for further analysis and extra characteristics for more botprint generation **304**.

The following sets forth certain examples of how specific metrics can be evaluated to achieve reportable results:
Location Evaluation: Using the data gathered as set forth above, a method has been invented to probabilistically, statistically and directly evaluate the location of clicks on a given web page executed during a given visit to a web page, and by doing so, evaluate, or contribute to a statistical model for the purposes of evaluating if that given visit was or was not made by an automated agent.

Interclick Timing Evaluation: Using the data gathered as set forth above, a method has been invented to probabilistically, statistically and directly evaluate the timing between clicks on a given web page during a given visit, as well as to use such interclick timing to identify or determine information about a given user or class of users. Such timing can provide a "fingerprint" of a given user's desktop and/or patterns of Internet browsing for the purpose of evaluating or contributing to a statistical model designed to evaluate if a given visit was or was not made by an automated agent, as well as for many other purposes.

VPN and Remote Desktop Interclick Timing Evaluation: Using the data gathered as set forth above, a method has been invented to perform Interclick Timing Evaluation even if a given browsing session actually traverses a virtual private network and/or remote desktop connection by relying upon the fact that mouse, keyboard and click commands must be transmitted over such connections at a fixed read rate.

Motion and State Related Mobile Automated Agent Detection: Using the data gathered as set forth above, several methods have been invented to determine whether or not a given browsing session that originates or appears to originate from a browser or application running on a mobile device, such as a smart phone or tablet, is being carried out in whole or in part by an automated agent. For example, HTML5 allows gyroscope and accelerometer readings to be taken "zero click," or without any active engagement with a web page by a user, and scroll information may be similarly read. The mere presence of information such as this, related to the position of the mobile device in space, and the engagement of the user with the interface of the mobile device, is deterministic of whether or not a human is present. Changes to information such as this, and the nature of such changes, may reflect the precise environment the device claims to be in, and evaluation of such information, its presence, absence or changing nature, may be used for the purpose of evaluating or contributing to a statistical model designed to evaluate if a given visit was or was not made by an automated agent, as well as for many other purposes.

IP and Geolocation Related Mobile Automated Agent Detection: The methodologies set forth above may be further supplemented by evaluating the IP address, purported geolocation and other more static data related to a given device and its user, both on its own and in reference to the data gathered in Motion and State Related Mobile Automated Agent Detection, for the purpose of evaluating or contributing to a statistical model designed to evaluate if a given visit was or was not made by an automated agent, as well as for many other purposes.

Time Based IP and Geolocation Related Mobile Automated Agent Detection: The IP and Geolocation Related Mobile Automated Agent Detection information set forth above may be further evaluated over long time frames, and compared to other such data, for the purpose of evaluating or contributing to a statistical model designed to evaluate if a given visit was or was not made by an automated agent, as well as for many other purposes.

Data Hiding and Separation: Perhaps the most efficient mechanism for deploying code for the purposes of determining whether a given browsing session is being performed by an automated agent, as well as to perform many other types of useful evaluations of web browsing events, is to cause a web page to in turn cause evaluative processing to be performed on the computer or other device that is in fact doing the browsing, and once such processing is completed, to transmit its results to a remote machine for further evaluation. Rather than being maximally efficient, a methodology has been invented that, while less efficient, is more secure and less likely to be detected, wherein a variety of metrics, useful for the instant purpose, but also useful for a number of other normal analytical purposes, are collected and transmitted to the remote server for evaluation. Thus, uncertainty is created as to which specific aspects of the data are actually being evaluated and for what purpose, and those malicious actors involved in creating and using automated browsing agents are less likely to and will require more resources to determine that any such evaluation is taking place.

Rendering Differential Evaluation: In addition to evaluating user interaction, it is also possible to evaluate how long various actions take to execute. When a human is in the loop, it is necessary that a web browser engage certain aspects of a computing device's hardware, including graphics hardware, sound hardware and the like. The amount of time to complete certain actions is dependent on whether such hardware is actually being engaged and to what degree (for example, whether the graphical action is opaque or semi-transparent). Certain factors further differentiate the amount of time taken, such as whether or not the browser must "reflow" the page, resulting in a predictable sequence of redraw events. This amount of time varies based on the nature of the screen, and most importantly, may be used to differentiate between an unaccclerated screen (a "virtual frame buffer") or a real screen.

Jitter Evaluation: The amount of "jitter" (as opposed to absolute time) witnessed is a further indication of whether a given system is doing a given task in the foreground or the background the background.

VM Timeslicing Analysis: It is possible to determine if Virtual Machine Timeslicing is occurring by the evaluation of rendering delays (i.e. by way of quantization of time potentials, as may be seen through repeated calls to millisecond timers in JavaScript).

Cache Validation: It is possible to use the behavior of web browser cookies and caches, particularly over time, to differentiate between human and automated browsers, especially if one browser is being driven across many destinations.

There are many applications for the presently claimed invention. In one application, the present technology integrates with financial anti-fraud (in a "send money" or a "shopping cart checkout" context). Another application of the present invention is for a pre-CAPTCHA signup auditor. It should be noted that the claimed system does not directly block a signup; it instead flags accounts that CAPTCHA systems are not noticing or catching. The claimed invention operates as an independent metric. It also operates as an excellent system for finding malware on internal enterprise networks, as most intranets use internal sites that attackers remotely browse. The system can detect that attackers are not actually the users they claim to be, even if and especially if they are tunneled through a machine on the corporate network.

The following sets forth additional examples of other general exemplary applications of the present invention, applicable to a wide range of fields and industries:
Engagement Evaluation: The data gathered as set forth above is especially useful as a tool for determining whether or not an automated agent is carrying out a given browsing session. This is not, however, its only use. The data gathered by each of the methodologies set forth herein may also be used where a browser is being driven by a human being and not an automated agent to determine how that user interacts with a web page and its various aspects, resulting in a measure of that user's engagement with that web page and its various aspects, both in a given browsing session, and in comparison to previous and future browsing sessions.

Botprinting: Different automated agents expose themselves in different ways. The evaluation of the information exposed by different automated agents, and gathered as set forth above, and/or gathered by any number of other methods, such as IP addresses, failure modes, level of JavaScript support, allows for their comparison and for the comparisons of the signatures of all agents evaluated. Such "Botprints" may be used to evaluate trends in the use of automated agents, to track their development and spread, and for any number of other purposes.

Evaluation of Browser Errors: The information delivered by the methods set forth above relating to browser errors may be used effectively to determine whether or not a given browsing session is being carried out by an automated agent. For example, it is possible to mine excess metrics and to intentionally cause JavaScript errors so that the error responses generated may be used to distinguish between automated agents and human browsers. When a command fails, this failure is caught, inside of a catch/try construction. This information is caught by the JavaScript of the presently claimed invention instead of being transmitted to the developer console. Suppose, for example, that a browser is a Chinese-speaking browser but is hiding the fact that they are Chinese-speaking. The browser errors caught by the present system and method will still be in that language (i.e. Chinese).

A-B Evaluation: It is known that different campaigns have different effectiveness on different audiences. Automated agents, however, are not driven by the same factors as human beings, and will not respond to different campaigns in the same manner as human beings will. When the technology set forth herein is deployed across different advertising campaigns, the comparison of differing responses by different sources of browsing traffic may be used as an active mechanism to detect or supplement the detection of automated behavior. Such comparison remains effective even when humans are used in place of automated agents for the purposes of carrying out advertising fraud.

Stochastic Signature Evaluation: The automated agent detection methodologies set forth herein need not be exposed on every web page or every load of a given page, nor do the same mechanisms need to be used each time or all the time. Mutation of the deployed JavaScript, in both location and style, significantly raises the cost of operators of automated agents success and limits their ability to develop and deploy effective countermeasures to the methods set fonh herein.

Evaluation in terms of Cost Per Human: Rather than evaluating web traffic and specifically advertising campaigns in terms of metrics such as cost per click, cost per thousand clicks, or cost per action, the present invention allows and contributes to the evaluation of such traffic in terms of a much more meaningful metric: cost per human ("CPH"). Rather than measuring clicks or other events that may or may not be generated by an automated agent, evaluation of CPH allows a much more meaningful determination of the effectiveness of amounts spent to attract traffic to a given web page. CPH is a better, more meaningful metric because the ultimate point of online advertising is not to serve "impressions" per se, but rather to show advertisement impressions to human beings specifically. CPH reflects the cost of reaching real humans by calculating advertising costs in terms of dollars spent per human reached, instead of dollars spent per impression served to anything, human or bot. CPH can be calculated as follows, for example. CPH = total advertisement spending divided by total human impressions obtained with that spending, multiplied by 1,000 (one thousand) to scale to the traditional measure, CPM (cost per M, i.e., cost per thousand). If an advertisement were shown 1,000 times for $10, the CPM of those impressions would equal $10. If, of those 1,000 impressions, 600 were shown to bots and only 400 to humans, the CPH would equal $25.

Heatmap Signature Evaluation: When a human being is present in a browsing session, the invention contained herein may be used to evaluate mouse and keyboard usage patterns so that for each such user, a pattern signature may be determined, assuming that the settings of that person's browser allow for such information to be gathered. Such signatures may be used for a number of purposes, such as targeting specific content to specific human users.

Heatmap Signature Correlation: With a sufficient number of heatmap signatures collected, it is possible to compare usage models across large numbers of websites and thus to detect insufficient or non-human variation models, with more data than an operator of automated agents may possess. It should be noted that while collecting heatmap signatures regarding where a given browser is clicking might be widely known, very detailed analysis of actual mouse events is much less widely known in the field of this invention. Furthermore, while the collection of inhuman movement patterns and incomplete event firings (like mouse down and mouse up, but no click on a non-mobile device) might be known by a few experts, collection of mouse event rates and malformed events is novel in the field.

Global Visibility: With the widespread deployment of the methodologies set forth herein, not only into destination sites, but also into the JavaScript that hosts the clicks itself, it is possible to measure rates of automated agent action not merely on sites that have actively deployed the necessary code snippet, but for effectively all sites that are able to deploy such a code snippet. Done properly, this methodology can provide a statistically significant sampling of all click fraud on the Internet, and thus provide global visibility with regard to automated browser action, and not just visibility into sites running our code snippet.

Source Page Embedding: By embedding the inventions set forth herein in the page from which a given click originates (the "source page"), interaction is guaranteed regardless of the nature of the visitor, since by definition a click requires interaction. Source page embedding external to an iframe, or inline frame, further allows monitoring of other advertising campaigns or content placed on a given source page without requiring the involvement of the parties placing such content.

Embed Locations: The technology described herein may be placed in the destination page inside an iframe on the page from which a click to be evaluated originated, or outside an iframe on the page from which a click to be evaluated originated, which not only takes advantage of the inherent benefits of each type of placement, but also allows for monitoring of the "total click lifecycle," or the sequence of events commencing with the presentation of a specific piece of content as part of the loading of a given web page, and continuing through a given user's interaction with and clicking of that specific piece of content, through any subsequent pages visited and pieces of content interacted with, and ending with either the abandonment of the browsing session, or a conversion event.

Real Time Filtering: The inventions set forth herein may be used to provide a given website, ad, ad campaign or other such user with real time filtering, and to effectively prevent automated agents from reaching their destinations. Such real time filtering can be as fast as 50 (fifty) milliseconds, although certain tests performed by the present invention offer a result only after a given page is "complete." In the latter case, a metric of "120 seconds since the last time that given page sent the system any data" is used. Additionally, the present invention can force a client code to stop sending data after 120 seconds. A few bots fail to honor the 120 second cut off and thus are easily identifiable.

Demand Service Provider Metrics: Advertising industry Demand Service Providers generate income by exploiting arbitrage opportunities with regard to the placement of online advertisements. By using the invention set forth herein to generate real time quality, engagement, CPH or other related metrics related to any such opportunity, it will allow for more effective evaluation of such opportunity.

Realtime Ad Purchase Metrics: Specifically, with regard to the foregoing, it is possible to determine in realtime whether or not a given ad should be placed or displayed for a given IP, making it possible to not only detect but proactively prevent fraudulent or otherwise unwanted clicks.

Browser Validation: A web browser's user agent (i.e. the type of web browser currently being used) may be misrepresented, or "spoofed," both by its HTTP source and/or by the content of the JavaScript DOM. The inventions set forth herein may be used to detect such spoofing by using browser version specific metrics.

Load validation: For efficiency, some content may not be loaded by automated agents. The inventions described herein may be used to detect such missing loads.

Proxy Detection: It is possible to alter the behavior of the evaluating server based on whether a proxy is in place. The manner in which all other metrics are evaluated may be altered based on the behavior of these intermediary nodes.

The description of a preferred embodiment of the invention has been presented for purposes of illustration and description. It is not intended to be exhaustive or to limit the invention to the precise forms disclosed. Obviously, many modifications and variations will be apparent to practitioners skilled in this an. It is intended that the scope of the invention be defined by the following claims.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

## Claims

1. A method for detecting and reporting on automated browser agent activity, comprising: employing a means for detecting user information to obtain a metric, measuring a differential based on pattern characteristics for humans and pattern characteristics for automated browser agents,
transmitting, via asynchronous HTTP posts, said user information to a server, wherein said server records a finding based on said user information and said differential, and repeating said detecting, measuring, and transmitting, thus compiling a report on human versus automated agent browser activity based on a qualitative evaluation of metrics obtained,
the method **characterized in that** the differential is based on a comparison of said metric to a first control group of pattern characteristics for humans, a comparison of said metric to a second control group of pattern characteristics for automated browser agents, and a comparison of said metric to a third control group of characteristics which are unclear as to whether performed by a human or an automated browser agent,
wherein said means for detecting further comprise: inserting a code snippet into a page HTML code before a page is sent to a user's browser and sending said page to a user's browser, wherein said code snippet causes data collection of user information once a user has loaded the page.

2. The method of claim 1, wherein said user information further comprises: content that is present that should be present, content that is present that should be absent, content that is absent that should be present, and content that is absent that should be absent.

3. The method of claim 1, wherein said code snippet is injected as an active scripting technology, or wherein said code snippet is injected either as JavaScript or as Flash.

4. The method of claim 1, wherein said user information further comprises:
an interaction with invisible elements of a page, missing properties of an interaction, a discrepancy between mouse events, atypical interface behavior, a wrong page element property, mismatching communication channels, a Flash update rate, syncing of Flash stages, a graphical update rate, JavaScript elements, error handling information, HTML5 standards compliance, bot-specific injected configurations, keyboard activity, accelerometer data, scroll events, average read and visit time, page update rate, and supported network protocols and web standards,
or further comprises:
information, generated over time, regarding the amount of time a given browser operation takes to express a result.

5. The method of claim 1, wherein said report further comprises, simultaneously, information regarding at least two of: location evaluation, interclick timing evaluation, VPN and remote desktop interclick timing evaluation, motion and state related mobile automated agent detection, motion and state related mobile automated agent detection, IP and geolocation related mobile automated agent detection, time based IP and geolocation related mobile automated agent detection, data hiding and separation, rendering differential evaluation, jitter evaluation, VM timeslicing analysis, and cache validation.

6. The method of claim 1, further comprising: registering a handler and a listener for a given browser event, wherein said handler receives user information associated with said browser event and said listener enables recovery of otherwise unidentifiable data.

7. The method of claim 1, wherein said data collection, comparing, and report are implemented via batch processing, or implemented via stream processing.

8. The method of claim 1, wherein said report is used, simultaneously, for at least two of: engagement evaluation, botprinting, evaluation of browser errors, A-B evaluation, stochastic signature evaluation, evaluation in terms of cost per human, heatmap signature evaluation, heatmap signature correlation, global visibility, source page embedding, embedding locations, real time filtering, demanding service provider metrics, real time ad purchase metric evaluation, browser validation, load validation, proxy detection, financial anti-fraud technology, and a pre-CAPTCHA signup auditor.

9. The method of claim 4, further comprising a repeating test for amplification of small timing differentials of advanced automated agents.

10. A computer system for bot detection, comprising:
a first stage of differential identification, comprising determining browsing activity based on origin and type of user, being human users versus an automated user,
a second stage of performance metric collection, comprising sending a page containing a pre-inserted code snippet for recording of particular user information, at page load and after page load, thereinafter transmitting said performance metric to a first server,
a third stage of evaluation of said performance metric within said first server, comprising comparing said performance metric against a first control group of pattern characteristics for humans, a second control group of pattern characteristics for automated browser agents, and a third control group of characteristics which are unclear as to whether performed by a human or an automated browser agent, thus creating a user data unit, thereinafter transmitting, via an asynchronous HTTP post, said user data unit to a second server,
and a fourth stage of reporting within said second server, comprising recording a finding based on said user data unit,
wherein said stages are repeated, thus compiling a report on human versus bot activity based on performance metrics collected.

11. The system of claim 10, wherein said performance metrics further comprise: content that is present that should be present, content that is present that should be absent, content that is absent that should be present, content that is absent that should be absent, and information, generated over time, regarding the amount of time a given browser operation takes to express a result.

12. The system of claim 10, wherein said user data units further comprise: an interaction with invisible elements of a page, missing properties of an interaction, a discrepancy between mouse events, atypical interface behavior, a wrong page element property, mismatching communication channels, a Flash update rate, syncing of Flash stages, a graphical update rate, JavaScript elements, error handling information, HTML5 standards compliance, bot-specific injected configurations, keyboard activity, accelerometer data, scroll events, average read and visit time, page update rate, and supported network protocols and web standards.

13. The system of claim 10, wherein said report on human versus bot activity further comprises, simultaneously, information regarding at least two of: location evaluation, interclick timing evaluation, VPN and remote desktop interclick timing evaluation, motion and state related mobile automated agent detection, motion and state related mobile automated agent detection, IP and geolocation related mobile automated agent detection, time based IP and geolocation related mobile automated agent detection, data hiding and separation, rendering differential evaluation, jitter evaluation, VM timeslicing analysis, and cache validation.

14. The system of claim 10, wherein said performance metrics, said evaluation, or said reporting is used, simultaneously, for at least two of: engagement evaluation, botprinting, evaluation of browser errors, A-B evaluation, stochastic signature evaluation, evaluation in terms of cost per human, heatmap signature evaluation, heatmap signature correlation, global visibility, source page embedding, embedding locations, real time filtering, demanding service provider metrics, real time ad purchase metric evaluation, browser validation, load validation, and proxy detection.

## Patentansprüche

1. Verfahren zum Erkennen und Berichten von Aktivitäten automatisierter Browser-Agenten, umfassend:
Einsetzen eines Mittels zum Erkennen von Benutzerinformationen, um eine Metrik zu erhalten, Messen eines Differentials basierend auf Mustermerkmalen für Menschen und Mustermerkmalen für automatisierte Browser-Agenten, Übertragen der Benutzerinformationen über asynchrone HTTP-Beiträge an einen Server, wobei der Server einen Befund basierend auf den Benutzerinformationen und dem Differential aufzeichnet, und Wiederholen des Erkennens, Messens und Übertragens, wodurch ein Bericht über die Browseraktivität eines Menschen gegenüber eines automatisierten Agenten basierend auf einer qualitativen Bewertung der erhaltenen Metriken erstellt wird,
wobei das Verfahren **dadurch gekennzeichnet ist, dass** das Differential auf einem Vergleich der Metrik mit einer ersten Kontrollgruppe von Mustermerkmalen für Menschen, einem Vergleich der Metrik mit einer zweiten Kontrollgruppe von Mustermerkmalen für automatisierte Browser-Agenten und einem Vergleich der Metrik mit einer dritten Kontrollgruppe von Merkmalen basiert, bei denen unklar ist, ob sie von einem Menschen oder einem automatisierten Browser-Agenten ausgeführt werden,
wobei die Mittel zum Erfassen ferner umfassen: Einfügen eines Code-Snippets in einen Seiten-HTML-Code, bevor eine Seite an den Browser eines Benutzers gesendet wird, und Senden dieser Seite an den Browser eines Benutzers, wobei das Code-Snippet die Datenerfassung von Benutzerinformationen bewirkt, sobald ein Benutzer die Seite geladen hat.

2. Verfahren nach Anspruch 1, wobei die Benutzerinformationen ferner umfassen:
vorhandenen Inhalt, der vorhanden sein sollte, vorhandenen Inhalt, der fehlen sollte, fehlenden Inhalt, der vorhanden sein sollte, und fehlenden Inhalt, der fehlen sollte.

3. Verfahren nach Anspruch 1, wobei das Code-Snippet als eine aktive Skripttechnologie eingespeist wird oder wobei das Code-Snippet entweder als JavaScript oder als Flash eingespeist wird.

4. Verfahren nach Anspruch 1, wobei die Benutzerinformationen ferner umfassen:
eine Interaktion mit unsichtbaren Elementen einer Seite, fehlende Eigenschaften einer Interaktion, eine Diskrepanz zwischen Mausereignissen, atypisches Schnittstellenverhalten, eine falsche Eigenschaft von Seitenelementen, nicht übereinstimmende Kommunikationskanäle, eine Flash-Aktualisierungsrate, Synchronisierung von Flash-Stufen, eine grafische Aktualisierungsrate, JavaScript-Elemente, Informationen zur Fehlerbehandlung, Einhaltung von HTML5-Standards, Botspezifische eingespeiste Konfigurationen, Tastaturaktivität, Beschleunigungsmesserdaten, Bildlaufereignisse, durchschnittliche Lese- und Besuchszeit, Seitenaktualisierungsrate und unterstützte Netzwerkprotokolle und Webstandards
oder ferner umfassen:
Informationen, die im Laufe der Zeit erzeugt werden, in Bezug auf die Zeit, die ein bestimmter Browservorgang benötigt, um ein Ergebnis auszudrücken.

5. Verfahren nach Anspruch 1, wobei der Bericht ferner gleichzeitig Informationen umfasst, die mindestens zwei der Folgenden betreffen: Standortbewertung, Interclick-Timing-Bewertung, VPN- und Interclick-Timing-Bewertung für einen Remote-Desktop, bewegungs- und zustandsbezogene mobile automatisierte Agentenerkennung, bewegungs- und zustandsbezogene mobile automatisierte Agentenerkennung, IP- und geolokalisierungsbezogene mobile automatisierte Agentenerkennung, zeitbasierte IP- und geolokalisierungsbezogene mobile automatisierte Agentenerkennung, Ausblenden und Trennen von Daten, Rendern von Differentialauswertungen, Jitter-Auswertungen, VM-Timeslicing-Analysen und Cache-Validierung.

6. Verfahren nach Anspruch 1, ferner umfassend: Registrieren eines Handlers und eines Listeners für ein bestimmtes Browserereignis, wobei der Handler Benutzerinformationen empfängt, die dem Browserereignis zugeordnet sind, und der Listener die Wiederherstellung ansonsten nicht identifizierbarer Daten ermöglicht.

7. Verfahren nach Anspruch 1, wobei das Erfassen, Vergleichen und Berichten von Daten über Batch-Verarbeitung implementiert werden oder über Stream-Verarbeitung implementiert werden.

8. Verfahren nach Anspruch 1, wobei der Bericht ferner gleichzeitig für mindestens zwei der Folgenden verwendet wird:
Engagement-Bewertung, Botprinting, Bewertung von Browserfehlern, A-B-Bewertung, stochastische Signaturbewertung, Bewertung hinsichtlich der Kosten pro Mensch, Heatmap-Signaturbewertung, Heatmap-Signaturkorrelation, globale Sichtbarkeit, Einbettung von Quellseiten, Einbettung von Standorten, Echtzeitfilterung, anspruchsvolle Dienstleistermetriken, Bewertung der Metriken für den Anzeigenkauf in Echtzeit, Browservalidierung, Lastvalidierung, Proxyerkennung, Technologie zur Bekämpfung von finanziellem Betrug und Pre-CAPTCHA-Anmeldeprüfer.

9. Verfahren nach Anspruch 4, ferner umfassend einen wiederholenden Test zur Verstärkung kleiner Timing-Differentiale fortgeschrittener automatisierter Agenten.

10. Computersystem zur Bot-Erkennung, umfassend:
eine erste Stufe der differenziellen Identifizierung, umfassend das Bestimmen der Browsing-Aktivität basierend auf Herkunft und Art des Benutzers, womit menschliche Benutzer gegenüber einem automatisierten Benutzer gemeint ist,
eine zweite Stufe der Erfassung einer Leistungsmetrik, umfassend das Senden einer Seite, die ein vorab eingefügtes Code-Snippet zum Aufzeichnen bestimmter Benutzerinformationen umfasst, beim Laden der Seite und nach dem Laden der Seite,
anschließend das Übertragen der Leistungsmetrik an einen ersten Server,
eine dritte Stufe der Bewertung der Leistungsmetrik innerhalb des ersten Servers, umfassend das Vergleichen der Leistungsmetrik mit einer ersten Kontrollgruppe von Mustermerkmalen für Menschen, einer zweiten Kontrollgruppe von Mustermerkmalen für automatisierte Browser-Agenten und einer dritten Kontrollgruppe von Merkmalen, bei denen unklar ist, ob sie von einem Menschen oder einem automatisierten Browser-Agenten ausgeführt werden, wodurch eine Benutzerdateneinheit erstellt wird, anschließend das Übertragen über einen asynchronen HTTP-Beitrag der Benutzerdateneinheit an einen zweiten Server
und eine vierte Stufe des Berichtens innerhalb des zweiten Servers, umfassend das Aufzeichnen eines Befundes basierend auf der Benutzerdateneinheit,
wobei die Stufen wiederholt werden, wodurch ein Bericht über die Aktivität eines Menschen gegenüber einem Bot basierend auf erfassten Leistungsmetriken erstellt wird.

11. System nach Anspruch 10, wobei die Leistungsmetriken ferner umfassen: vorhandenen Inhalt, der vorhanden sein sollte, vorhandenen Inhalt, der fehlen sollte, fehlenden Inhalt, der vorhanden sein sollte, und fehlenden Inhalt, der fehlen sollte, und Informationen, die im Laufe der Zeit erzeugt werden, in Bezug auf die Zeit, die ein bestimmter Browservorgang benötigt, um ein Ergebnis auszudrücken.

12. System nach Anspruch 10, wobei die Benutzerdateneinheiten ferner umfassen: eine Interaktion mit unsichtbaren Elementen einer Seite, fehlende Eigenschaften einer Interaktion, eine Diskrepanz zwischen Mausereignissen, ein atypisches Schnittstellenverhalten, eine falsche Eigenschaft von Seitenelementen, nicht übereinstimmende Kommunikationskanäle, eine Flash-Aktualisierungsrate, Synchronisierung von Flash-Stufen, eine grafische Aktualisierungsrate, JavaScript-Elemente, Informationen zur Fehlerbehandlung, Einhaltung von HTML5-Standards, Botspezifische eingespeiste Konfigurationen, Tastaturaktivität, Beschleunigungsmesserdaten, Bildlaufereignisse, durchschnittliche Lese- und Besuchszeit, Seitenaktualisierungsrate und unterstützte Netzwerkprotokolle und Webstandards.

13. System nach Anspruch 10, wobei der Bericht über menschliche gegenüber Bot-Aktivitäten ferner gleichzeitig Informationen umfasst, die mindestens zwei der Folgenden betreffen: Standortbewertung, Interclick-Timing-Bewertung, VPN- und Interclick-Timing-Bewertung für einen Remote-Desktop, bewegungs- und zustandsbezogene mobile automatisierte Agentenerkennung, bewegungs- und zustandsbezogene mobile automatisierte Agentenerkennung, IP- und geolokalisierungsbezogene mobile automatisierte Agentenerkennung, zeitbasierte IP- und geolokalisierungsbezogene mobile automatisierte Agentenerkennung, Ausblenden und Trennen von Daten, Rendern von Differentialauswertungen, Jitter-Auswertungen, VM-Timeslicing-Analysen und Cache-Validierung.

14. System nach Anspruch 10, wobei die Leistungsmetriken, die Bewertung oder das Berichten ferner gleichzeitig für mindestens zwei der Folgenden verwendet wird: Engagement-Bewertung, Botprinting, Bewertung von Browserfehlern, A-B-Bewertung, stochastische Signaturbewertung, Bewertung hinsichtlich der Kosten pro Mensch, Heatmap-Signaturbewertung, Heatmap-Signaturkorrelation, globale Sichtbarkeit, Einbettung von Quellseiten, Einbettung von Standorten, Echtzeitfilterung, anspruchsvolle Dienstleistermetriken, Bewertung der Metriken für den Anzeigenkauf in Echtzeit, Browservalidierung, Lastvalidierung und Proxyerkennung.

## Revendications

1. Procédé de détection et de génération de rapports sur l'activité d'agent de navigation automatisé, comprenant :
l'emploi d'un moyen pour détecter des informations d'utilisateur pour obtenir une mesure, la mesure d'un différentiel basé sur des caractéristiques de motif pour les humains et des caractéristiques de motif pour des agents de navigation automatisés, la transmission, par l'intermédiaire des messages HTTP asynchrones, desdites informations d'utilisateur à un serveur, dans lequel ledit serveur enregistre une constatation basée sur lesdites informations d'utilisateur et ledit différentiel, et la répétition desdites détection, mesure et transmission, établissant ainsi un rapport sur l'activité du navigateur d'agent humain par rapport à un agent automatisé sur la base d'une évaluation qualitative des mesures obtenues, le procédé **caractérisé en ce que** le différentiel est basé sur une comparaison de ladite mesure à un premier groupe témoin de caractéristiques de motif pour les humains, une comparaison de ladite mesure à un deuxième groupe témoin de caractéristiques de motif pour les agents de navigation automatisés, et une comparaison de ladite mesure à un troisième groupe témoin de caractéristiques qui ne sont pas claires quant à leur réalisation par un humain ou un agent de navigation automatisé, dans lequel ledit moyen de détection comprend en outre :
l'insertion d'un extrait de code dans un code HTML de page avant qu'une page ne soit envoyée au navigateur d'un utilisateur et l'envoi de ladite page au navigateur d'un utilisateur, dans lequel ledit extrait de code amène la collecte de données d'informations sur l'utilisateur une fois qu'un utilisateur a chargé la page.

2. Procédé selon la revendication 1, dans lequel lesdites informations d'utilisateur comprennent en outre :
le contenu présent qui devrait être présent, le contenu présent qui devrait être absent, le contenu absent qui devrait être présent et le contenu absent qui devrait être absent.

3. Procédé selon la revendication 1, dans lequel ledit fragment de code est injecté comme technologie de script active, ou dans lequel ledit fragment de code est injecté soit en JavaScript, soit en Flash.

4. Procédé selon la revendication 1, dans lequel lesdites informations d'utilisateur comprennent en outre :
une interaction avec des éléments invisibles d'une page, des propriétés manquantes d'une interaction, un écart entre les événements de la souris, un comportement d'interface atypique, une propriété d'élément de page erronée, des canaux de communication incompatibles, un taux de mise à jour Flash, une synchronisation des étapes Flash, un taux de mise à jour graphique, des éléments JavaScript, des informations sur la gestion des erreurs, la conformité aux normes HTML5, des configurations injectées spécifiques aux robots, une activité du clavier, des données de l'accéléromètre, des événements de défilement, un temps moyen de lecture et de consultation, des taux de mise à jour de la page et des protocoles réseau et normes Web pris en charge, ou comprennent en outre :
des informations, générées au fil du temps, concernant le temps nécessaire à une opération de navigateur donnée pour exprimer un résultat.

5. Procédé selon la revendication 1, dans lequel ledit rapport comprend en outre, simultanément, des informations concernant au moins deux des opérations suivantes :
l'évaluation de l'emplacement, l'évaluation de la synchronisation entre les clics, l'évaluation de la synchronisation entre les clics VPN et de bureau à distance, la détection d'agent automatisé mobile lié au mouvement et à l'état, la détection d'agent automatisé mobile liée au mouvement et à l'état, la détection d'agent automatisé mobile liée à l'adresse IP et à la géolocalisation, la détection d'agent automatisé mobile liée à l'adresse IP basée sur le temps et à la géolocalisation, le masquage et la séparation des données, l'évaluation différentielle du rendu, l'évaluation de gigue, l'analyse du découpage temporel des machines virtuelles et la validation de cache.

6. Procédé selon la revendication 1, comprenant en outre :
l'enregistrement d'un gestionnaire et d'un auditeur pour un événement de navigateur donné, dans lequel ledit gestionnaire reçoit des informations d'utilisateur associées audit événement de navigateur et ledit auditeur permet la récupération de données autrement non identifiables.

7. Procédé selon la revendication 1, dans lequel la collecte, la comparaison et l'établissement du rapport des données sont effectués par traitement par lots ou par traitement en continu.

8. Procédé selon la revendication 1, dans lequel ledit rapport est utilisé, simultanément, pour au moins deux des opérations suivantes :
l'évaluation de l'engagement, l'impression par robot, l'évaluation des erreurs de navigateur, l'évaluation A-B, l'évaluation de signature stochastique, l'évaluation en termes de coût par humain, l'évaluation de signature de carte thermique, la corrélation de signature de carte thermique, la visibilité globale, l'intégration de la page source, l'emplacements d'intégration, le filtrage en temps réel, les mesures de fournisseur de services exigeants, l'évaluation des mesures d'achat d'annonces en temps réel, la validation de navigateur, la validation de charge, la détection de proxy, la technologie de lutte contre la fraude financière et l'auditeur d'inscription pré-CAPTCHA.

9. Procédé selon la revendication 4, comprenant en outre un test répété d'amplification de petits différentiels de temps d'agents automatisés avancés.

10. Système informatique pour la détection de robots, comprenant :
une première étape d'identification différentielle, comprenant la détermination de l'activité de navigation en fonction de l'origine et du type d'utilisateur, étant des utilisateurs humains par rapport à un utilisateur automatisé, une deuxième étape de collecte de mesures de performance, comprenant l'envoi d'une page contenant un extrait de code pré-inséré pour l'enregistrement des informations d'utilisateur, lors du chargement de la page et après le chargement de la page, après avoir transmis ladite mesure de performance à un premier serveur, une troisième étape d'évaluation de ladite mesure de performance dans ledit premier serveur, comprenant la comparaison de ladite mesure de performance à un premier groupe témoin de caractéristiques de motif pour les humains, un deuxième groupe témoin de caractéristiques de motif pour les agents de navigation automatisés et un troisième groupe témoin de caractéristiques qui ne sont pas claires quant à leur réalisation par un humain ou un agent de navigation automatisé, créant ainsi une unité de données d'utilisateur, transmettant par la suite, par l'intermédiaire d'un message HTTP asynchrone, ladite unité de données d'utilisateur à un deuxième serveur et une quatrième étape d'établissement de rapport dans ledit second serveur, comprenant l'enregistrement d'une constatation basée sur ladite unité de données d'utilisateur, dans lequel lesdites étapes sont répétées, établissant ainsi un rapport sur l'activité humaine par rapport aux robots sur la base des mesures de performance collectées.

11. Système selon la revendication 10, dans lequel lesdites mesures de performance comprennent en outre :
le contenu présent qui devrait être présent, le contenu présent qui devrait être absent, le contenu absent qui devrait être présent, le contenu absent qui devrait être absent et les informations, générées au fil du temps, concernant le temps qu'une exploitation donnée du navigateur met pour exprimer un résultat.

12. Système selon la revendication 10, dans lequel lesdites unités de données d'utilisateur comprennent en outre :
une interaction avec des éléments invisibles d'une page, des propriétés manquantes d'une interaction, un écart entre les événements de la souris, un comportement d'interface atypique, une propriété d'élément de page erronée, des canaux de communication incompatibles, un taux de mise à jour Flash, une synchronisation des étapes Flash, un taux de mise à jour graphique, des éléments JavaScript, des informations sur la gestion des erreurs, la conformité aux normes HTML5, des configurations injectées spécifiques aux robots, une activité du clavier, des données de l'accéléromètre, des événements de défilement, un temps moyen de lecture et de consultation, des taux de mise à jour de la page et des protocoles réseau et normes Web pris en charge.

13. Système selon la revendication 10, dans lequel ledit rapport sur l'activité des humains par rapport à celle des robots comprend en outre, simultanément, des informations concernant au moins deux des opérations suivantes :
l'évaluation de l'emplacement, l'évaluation de la synchronisation entre les clics, l'évaluation de la synchronisation entre les clics VPN et de bureau à distance, la détection d'agent automatisé mobile lié au mouvement et à l'état, la détection d'agent automatisé mobile liée au mouvement et à l'état, la détection d'agent automatisé mobile liée à l'adresse IP et à la géolocalisation, la détection d'agent automatisé mobile liée à l'adresse IP basée sur le temps et à la géolocalisation, le masquage et la séparation des données, l'évaluation différentielle du rendu, l'évaluation de gigue, l'analyse du découpage temporel des machines virtuelles et la validation de cache.

14. Système selon la revendication 10, dans lequel lesdites mesures de performance, ladite évaluation ou ledit rapport sont utilisés, simultanément, pour au moins deux des opérations suivantes :
l'évaluation de l'engagement, l'impression par robot, l'évaluation des erreurs de navigateur, l'évaluation A-B, l'évaluation de signature stochastique, l'évaluation en termes de coût par humain, l'évaluation de signature de carte thermique, la corrélation de signature de carte thermique, la visibilité globale, l'intégration de la page source, l'emplacements d'intégration, le filtrage en temps réel, les mesures de fournisseur de services exigeants, l'évaluation des mesures d'achat d'annonces en temps réel, la validation de navigateur, la validation de charge et la détection de proxy.
